# EUROPEAN PATENT APPLICATION

(11) **EP 4 683 024 A2**
(43) Date of publication of application: **21.01.2026**
(21) Application number: 25178193.6
(22) Date of filing: 22.05.2025
(51) Int. Cl.: H01M 10/04, H01M 10/0587, H01M 50/586, H01M 50/595, H01M 50/593

(54) **SECONDARY BATTERY, BATTERY ASSEMBLY AND ELECTRONIC DEVICE**

(30) Priority: 18.07.2024 CN 202421709624 U
(71) Applicant: AESC Japan Ltd., Yokohama-Shi, Kanagawa 220-0012 (JP)
(72) Inventor: ZHANG, Wenjing, Wuxi City, 214443 (CN); SHAN, Xueyan, Wuxi City, 214443 (CN)
(74) Representative: Becker, Eberhard

(57) **Abstract**

Disclosed is a secondary battery (100), a battery assembly (10) and an electronic device (1). The secondary battery includes a housing (110), an electrode assembly (120), and a current collector member (130). The electrode assembly includes a wound structure formed by stacking and winding a positive electrode sheet (121), a negative electrode sheet (123) and a separator (122). The positive electrode sheet includes a positive electrode coated area (1212), a positive electrode uncoated area (1213), which bents toward the winding axis (127) to form a stacked positive electrode uncoated area (125), and an insulation layer (128). The current collector member is welded to the stacked positive electrode uncoated area. A first insulation layer (1281) facing the winding axis and a second insulation layer (1282) facing away from the winding axis included in the insulation layer extend toward the stacked positive electrode uncoated area.

## Description

### BACKGROUND

### Technical Field

The present disclosure relates to the field of batteries, specifically relating to a secondary battery, a battery assembly and an electronic device.

### Description of Related Art

As one of the most critical components of new energy vehicles, the advantages of lithium-ion batteries lie in high energy density, long cycle life, safety, environmental friendliness, and so on, thus gradually becoming the mainstream in the era of electrification. In terms of physical form, lithium-ion batteries are categorized as prismatic batteries, pouch batteries, and columnar batteries. Specifically, columnar batteries are gaining significant attention due to their high volumetric energy density, simple structure, ease of assembly into modules, and suitability for standardization.

The core of the columnar battery is formed by winding the positive electrode sheet, separator, and negative electrode sheet. One end of the positive electrode sheet not coated with the positive electrode active substance is bent toward the center of the columnar battery to form a stacked positive electrode uncoated area. Subsequently, a current collector member is pressed onto the stacked positive electrode uncoated area and welded for fixation. Generally, the positive electrode sheet is made of aluminum foil, which has relatively high rigidity. When the current collector member is pressed against the stacked positive electrode uncoated area, the stacked positive electrode uncoated area might experience collapse and misalignment during the bending process under pressure.

### SUMMARY

Given the shortcomings of the related art, the present disclosure provides a secondary battery to overcome the technical problem of collapse and misalignment of the stacked positive electrode uncoated area during the bending process.

To achieve the above purpose and other related purposes, the present disclosure provides a secondary battery, which includes a housing, an electrode assembly, and a current collector member. The electrode assembly is accommodated in the housing. The electrode assembly includes a wound structure formed by stacking and winding a positive electrode sheet, a negative electrode sheet and a separator. The positive electrode sheet includes a positive electrode coated area coated with a positive active substance layer and a positive electrode uncoated area not coated with the positive active substance layer, and an insulation layer at least covering an interface between the positive electrode coated area and the positive electrode uncoated area. One end of the positive electrode uncoated area extends beyond the separator along the winding axis of the electrode assembly, and is bent toward the winding axis to form a stacked positive electrode uncoated area. The current collector member at least partially covers the stacked positive electrode uncoated area, and is welded to the stacked positive electrode uncoated area. The insulation layer includes a first insulation layer disposed on the first side surface of the positive electrode sheet facing the winding axis and a second insulation layer on the second side surface facing away from the winding axis. Both the first insulation layer and the second insulation layer extend toward the stacked positive electrode uncoated area along the winding axis. Along the winding axis, the height h1 of the first insulation layer is greater than the height h2 of the second insulation layer.

In the above technical solution, the insulation layer at least covers an interface between the positive electrode coated area and the positive electrode uncoated area, and extends toward the bending part of the stacked positive electrode uncoated area. That is, the insulation layer at least partially covers the positive electrode uncoated area, so it is possible to provide support against the force from the current collector member pressing when the stacked positive electrode uncoated area is bent. Furthermore, the first insulation layer is located on the first side surface facing the winding axis, that is, located below the stacked positive electrode uncoated area that is bent, so it is possible to directly provide the stacked positive electrode uncoated area with a reaction force to resist the pressure from the current collector member. Setting the height of the first insulation layer to be higher than the height of the second insulation layer may further improve the supporting force for the stacked positive electrode uncoated area, relieve the problem of collapse and misalignment of the stacked area of the positive electrode uncoated area, improve the flatness of the welding plane of the stacked positive electrode uncoated area, and enhance the welding yield.

In an example of the secondary battery in the present disclosure, the difference between h1 and h2 is t, 0.2mm≤t≤1.5mm.

In the above technical solution, the range of the difference t between the height of the first insulation layer and the height of the second insulation layer is 0.2mm≤t≤1.5mm, which enables the first insulation layer to maintain a safe distance from the stacked positive electrode uncoated area, and may reduce the risk of the first insulation layer being damaged and powdering due to pressure from the stacked positive electrode uncoated area.

In an example of the secondary battery in the present disclosure, the radius dimension of the misaligned part of the outermost electrode tab facing the outer periphery of the electrode assembly is a, wherein a≤1.5mm. The misaligned part is a part between the root of the positive electrode uncoated area and the outermost side of the outermost positive electrode uncoated area along the radius direction of the electrode assembly.

In the above technical solution, the misaligned part is formed when the stacked positive electrode uncoated area protrudes outward from the root of the stacked positive electrode uncoated area toward the radius direction outside of the electrode assembly during the bending process of the stacked positive electrode uncoated area toward the winding axis and the compression process after bending. The setting of a≤1.5mm may increase the annular width of the stabilization area of the stacked positive electrode uncoated area suitable for welding, which is more conducive to welding, and reduces the slope of the inclined surface formed by the misaligned stacked positive electrode uncoated area, reducing the gap between the stacked positive electrode uncoated area and the current collector member, so it is possible to improve the reliability and convenience of welding.

In an example of the secondary battery in the present disclosure, on a reference plane formed by any radial line of the winding axis and the end surface of the electrode assembly, the outer ring of the wound structure cuts n circles of positive electrode uncoated area. The sum of the thicknesses of the positive electrode sheet, the separator and the negative electrode sheet is b, wherein a/b<n.

In the above technical solution, the setting of a/b<n may enable the annular region without electrode tabs in the wound structure to accommodate the misaligned part of the outermost stacked positive electrode uncoated area after collapse, ensuring that the misaligned part of the stacked positive electrode uncoated area does not extend beyond the outer periphery of the electrode assembly, thereby reducing the probability of affecting the insertion of the electrode assembly into the housing.

In an example of the secondary battery in the present disclosure, from the outer ring to the inner ring of the electrode assembly, the stacked positive electrode uncoated area sequentially includes a stacking layer number increasing area, a stacking layer number stabilization area and a stacking layer number decreasing area, wherein the stacked positive electrode uncoated area located in the stacking layer number decreasing area extends in a direction facing away from the current collector member.

In the above technical solution, it is possible to form a recessed inclined surface at the position of the electrode assembly near the winding axis. This inclined surface may function to guide the electrolyte fluid on one hand, and on the other hand, may prevent the stacked positive electrode uncoated area located in the stacking layer number decreasing area from warping upward, thus improving the stability and convenience of welding between the current collector member and the stacked positive electrode uncoated area.

In an example of the secondary battery in the present disclosure, the annular width of the stacked positive electrode uncoated area is r, the annular width of the stacking layer number stabilization area is c, wherein c/r≥0.35.

In the above technical solution, the setting of c/r≥0.35 may ensure the range of the stacking layer number stabilization area, improve the reliability of welding, help reduce internal resistance, and enhance the performance of the secondary battery.

In an example of the secondary battery in the present disclosure, the insulation layer includes a ceramic filler.

In the above technical solution, the ceramic filler, while ensuring insulation properties, possesses relatively high rigidity and may provide more stable supporting force.

In an example of the secondary battery in the present disclosure, the brightness of the first insulation layer is different from the brightness of the second insulation layer.

In the above technical solution, by observing the difference in brightness between the first insulation layer and the second insulation layer, the front and rear sides of the positive electrode sheet may be effectively distinguished, preventing situations where the front and rear sides of the positive electrode sheet are reversed. Moreover, the insulation layer does not participate in chemical reactions, and identifying the front and rear sides of the positive electrode sheet through the insulation layer does not require additional markings, resulting in minimal impact on the battery.

The present disclosure also provides a battery assembly, which includes the secondary battery described in any one of the above embodiments.

The present disclosure also provides an electronic device, which includes the battery assembly described above.

In the secondary battery in the present disclosure, the insulation layer at least covers the interface between the positive electrode coated area and the positive electrode uncoated area, and extends to the bending part of the stacked positive electrode uncoated area. That is, the insulation layer at least partially covers the unbent area of the positive electrode uncoated area, which may function as support against the force from the compression of the current collector member when the stacked positive electrode uncoated area is bent. Furthermore, the first insulation layer is located on the first side surface facing the winding axis, that is, located below the stacked positive electrode uncoated area that is bent, which may directly provide the stacked positive electrode uncoated area with a reaction force to resist pressure from the current collector member. Setting the height of the first insulation layer to be higher than the height of the second insulation layer may further improve the supporting force for the stacked positive electrode uncoated area, relieve the problem of misalignment after the collapse of the stacked positive electrode uncoated area, improve the flatness of the welding plane of the stacked positive electrode uncoated area, and enhance the welding yield.

### BRIEF DESCRIPTION OF THE DRAWINGS

In order to explain the technical solutions in the embodiments of the present disclosure or the related art more clearly, a brief introduction will be given below to the drawings required in the description of the embodiments or the related art. Clearly, the drawings described below are only some embodiments of the present disclosure. For those skilled in the art, other embodiments may be obtained based on these drawings without creative labor.
FIG. 1 is a schematic structural diagram of an example of the secondary battery of the present disclosure.
FIG. 2 is a schematic structural diagram of an electrode assembly in an example of the secondary battery of the present disclosure.
FIG. 3 is a sectional diagram of an electrode assembly in an example of the secondary battery in the present disclosure.
FIG. 4 is a sectional diagram of a single positive electrode sheet in an example of the secondary battery in the present disclosure.
FIG. 5 is a schematic structural diagram of a stacked positive electrode uncoated area in an example of the secondary battery in the present disclosure.
FIG. 6 is a schematic diagram of an example of a battery assembly in the present disclosure.
FIG. 7 is a schematic diagram of an example of an electronic device in the present disclosure.

### DESCRIPTION OF THE EMBODIMENTS

The implementation mode of the present disclosure is explained below through specific examples, and those skilled in the art may easily understand other advantages and effects of the present disclosure from the content disclosed in this specification. The present disclosure may also be implemented or applied through other different specific embodiments, and various details in this specification may also be modified or changed based on different perspectives and applications without departing from the spirit of the present disclosure. It should be noted that, in the absence of conflict, the features in the following examples and embodiments may be combined with each other. It should also be understood that the terms used in the embodiments of the present disclosure are for describing specific embodiments and not for limiting the scope to be protected by the present disclosure. For test methods where specific conditions are not specified in the following examples, they are generally performed under conventional conditions or according to conditions recommended by manufacturers.

When a numerical range is provided in embodiments, it should be understood that, unless otherwise specified in the present disclosure, each of the two endpoints of the numerical range as well as any value between these two endpoints may be adopted. Unless otherwise defined, all technical and scientific terms used in the present disclosure are consistent with the understanding of those skilled in the art in the field and the disclosure of the present disclosure. The present disclosure may also be implemented using any methods, devices, and materials in the related art that are similar or equivalent to the methods, devices, and materials in the embodiments of the present disclosure.

It should be noted that terms such as "upper", "lower", "left", "right", "middle" and "one" used in this specification are merely for clarity of description and not for limiting the scope in which the present disclosure may be implemented. Changes or adjustments in their relative relationships, without substantially changing the technical content, may also be considered within the scope in which the present disclosure may be implemented.

The secondary battery includes a housing and an electrode assembly, which is accommodated in the housing and a component in the secondary battery where electrochemical reactions occur. The housing may include one or more electrode assemblies.

The electrode assembly is mainly formed by winding or stacking a positive electrode sheet and a negative electrode sheet, and typically a separator is disposed between the positive electrode sheet and the negative electrode sheet. The positive electrode sheet includes a positive electrode current collector and a positive electrode active substance, with the positive electrode active substance coated on the surface of the positive electrode current collector. The positive electrode current collector includes a positive electrode coated area coated with active substance and a positive electrode uncoated area not coated with the active substance. The positive electrode uncoated area forms a stacked positive electrode uncoated area after winding. The negative electrode sheet includes a negative electrode current collector and a negative electrode active substance, with the negative electrode active substance coated on the surface of the negative electrode current collector. The negative electrode current collector includes a negative electrode coated area coated with active substance and a negative electrode uncoated area not coated with the active substance, and the negative electrode uncoated area forms a stacked negative electrode uncoated area after winding. Taking lithium-ion secondary batteries as an example, the material of the positive electrode current collector may be aluminium. The positive electrode active substance layer includes a positive electrode active substance, which may be lithium cobalt oxide, lithium iron phosphate, ternary lithium, or lithium manganese oxide, etc. The material of the negative electrode current collector may be copper. The negative electrode active substance layer includes a negative electrode active substance, which may be carbon or silicon, etc. The material of the separator may be PP (polypropylene) or PE (polyethylene), etc. To provide protection and insulation for the cell, an insulation film may also be covered on the outside of the cell, which may be synthesized from PP, PE, PET, PVC, or other polymer materials.

However, the inventors of the present disclosure have found that in existing secondary batteries, the positive electrode sheet is generally made of aluminum foil with relatively high rigidity. When the current collector member and the stacked positive electrode uncoated area are pressed against each other, the stacked positive electrode uncoated area may collapse and misalign during the bending process, which affects the flatness of the entire welding plane of the stacked positive electrode uncoated area, resulting in large gaps between the current collector member and the stacked positive electrode uncoated area, thus affecting the reliability of the welding between the current collector member and the stacked positive electrode uncoated area.

Given that being said, the present disclosure provides a technical solution where an insulation layer is disposed below the stacked positive electrode uncoated area, and the insulation layer includes a first insulation layer disposed on the first side surface of the positive electrode sheet facing the winding axis and a second insulation layer located on the second side surface opposite to the first side surface. By setting the height of the first insulation layer to be higher than the height of the second insulation layer, it is possible to further improve the supporting force for the stacked positive electrode uncoated area, relieving the problem of collapse and misalignment of the stacked positive electrode uncoated area, improving the flatness of the welding plane of the stacked positive electrode uncoated area, and enhancing the welding yield.

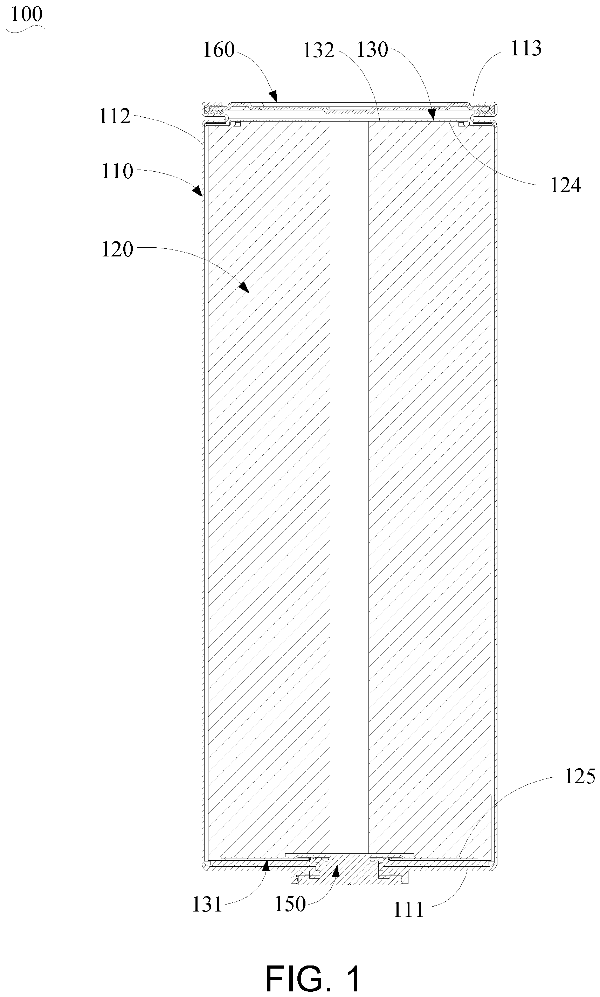

Please refer to FIG. 1 to FIG. 7, the present disclosure provides a secondary battery 100, which includes a housing 110, an electrode assembly 120, a current collector member 130, an insulation layer 128, a terminal 150, and a cover plate 160.

Please refer to FIG. 1, the housing 110 includes an end wall 111 and a side wall 112 surrounding the end wall 111. As long as a stable sealing and electrical connection relationship can be established, the connection between the end wall 111 and the side wall 112 may be achieved through various methods, such as integral stamping, integral casting, or separate welding. The surrounding configuration of the side wall 112 is not limited, which may be in a cylindrical or prismatic form, or may surround along any other closed-loop contour that can match the end wall 111. In an embodiment, the outer edge of the end wall 111 in the embodiment is circular, the side wall 112 surrounds the outer edge of the end wall 111 in a cylindrical shape, and forms a circular opening 113 at one end of the side wall 112 facing away from the end wall 111. An accommodating cavity is formed in the housing 110 formed by the end wall 111 and the side wall 112 for accommodating the electrode assembly 120, electrolyte, and other necessary battery components. Specifically, the diameter of the housing 110 may be determined according to the specific dimensions of the electrode assembly 120, such as 18mm, 21mm, 46mm, etc. The material of the housing 110 may be various, such as copper, iron, aluminum, steel, aluminum alloy, etc. In order to prevent the housing 110 from rusting after long-term use, a layer of anti-rust material such as metallic nickel may be plated on the surface of the housing 110.

Please refer to FIG. 1 to FIG. 3, the electrode assembly 120 is accommodated in the housing 110. The electrode assembly 120 includes a positive electrode sheet 121, a negative electrode sheet 123, and a separator 122 stacked and wound to form a wound structure. The positive electrode sheet 121 includes a positive electrode current collector 1211 and a positive electrode active substance, with the positive electrode active substance coated on the surface of the positive electrode current collector 1211. The positive electrode current collector 1211 includes a positive electrode coated area 1212 coated with active substance, a positive electrode uncoated area 1213 not coated with the active substance, and an insulation layer 128 that at least covers an interface between the positive electrode coated area 1212 and the positive electrode uncoated area 1213. One end of the positive electrode uncoated area 1213 extends beyond the separator 122 along the winding axis 127 of the electrode assembly 120, and bends toward the winding axis 127 to form a stacked positive electrode uncoated area 125. The negative electrode sheet 123 includes a negative electrode current collector 1231 and a negative electrode active substance, with the negative electrode active substance coated on the surface of the negative electrode current collector 1231. The negative electrode current collector 1231 includes a negative electrode coated area 1232 coated with active substance and a negative electrode uncoated area 1233 not coated with the active substance. One end of the negative electrode uncoated area 1233 extends beyond the separator 122 along the winding axis 127 of the electrode assembly 120, and bends toward the winding axis 127 to form a stacked negative electrode uncoated area 124.

Please refer to FIG. 1, the current collector member 130 includes a first current collector member 131 and a second current collector member 132. The material of the first current collector member 131 and the second current collector member 132 may be selected according to the polarity of the electrode tabs connected to them. For example, if the second current collector member 132 is connected to the stacked positive electrode uncoated area 125, then the material of the second current collector member 132 may be selected from aluminum metal, in which case the first current collector member 131 is connected to the stacked negative electrode uncoated area 124, and the material thereof may be selected from copper metal. If the second current collector member 132 is connected to the stacked negative electrode uncoated area 124, then the material of the second current collector member 132 may be selected from copper metal, in which case the first current collector member 131 is connected to the stacked positive electrode uncoated area 125, and the material of the first current collector member 131 may be selected from aluminum metal. The shape and structure of the second current collector member 132 and the first current collector member 131 are also not limited, as long as they can achieve stable and reliable electrical connection. In this embodiment, the first current collector member 131 at least partially covers the stacked positive electrode uncoated area 125, and is welded to the stacked positive electrode uncoated area 125. The second current collector member 132 at least partially covers the stacked negative electrode uncoated area 124, and is welded to the stacked negative electrode uncoated area 124. The material of the first current collector member 131 is aluminum metal.

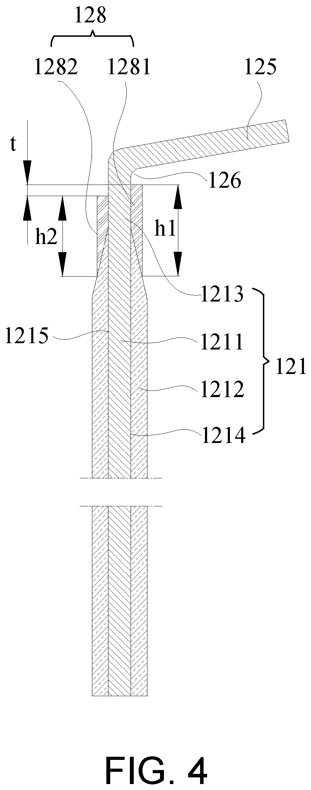

Please refer to FIG. 4, the insulation layer 128 at least covers the interface between the positive electrode coated area 1212 and the positive electrode uncoated area 1213, and extends toward the bending part 126 of the stacked positive electrode uncoated area 125. That is, the insulation layer 128 may either partially overlap with the positive electrode coated area 1212, or may be set adjacent to the positive electrode coated area 1212. During actual processing, the bending part 126 of the stacked positive electrode uncoated area 125 is a bent rounded corner. The insulation layer 128 at least partially covers the positive electrode uncoated area 1213, and may provide support against the clamping force from the current collector member 130 when the stacked positive electrode uncoated area 125 is bent. Both forms of the insulation layer 128 mentioned above may at least partially cover the positive electrode uncoated area 1213, and may provide support against the clamping force from the current collector member 130 when the stacked positive electrode uncoated area 125 is bent. Preferably, in this embodiment, the insulation layer 128 partially overlaps with the positive electrode coated area 1212, which provides better supporting effect.

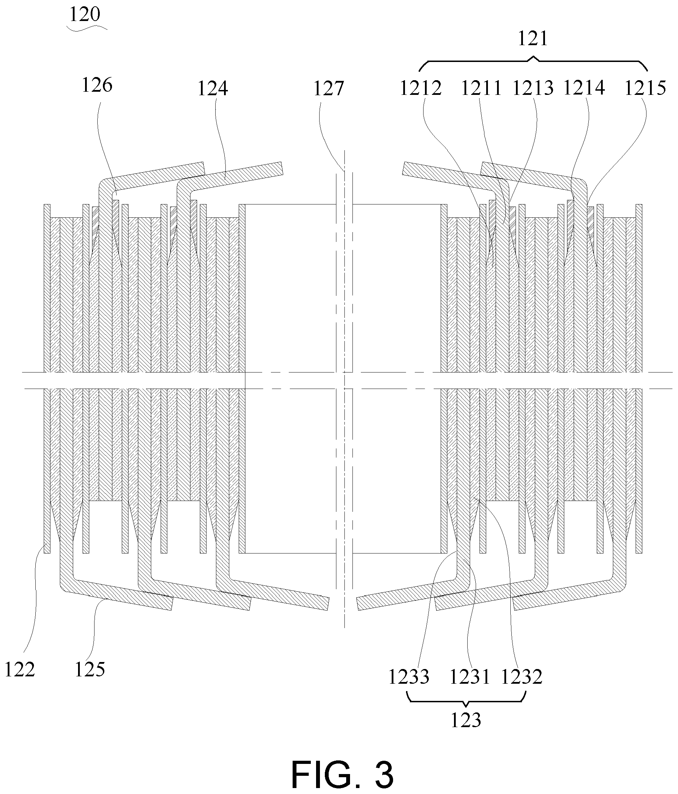

Please refer to FIG. 3 and FIG. 4, the insulation layer 128 includes a first insulation layer 1281 disposed on the first side surface 1214 of the positive electrode sheet 121 facing the winding axis 127, and a second insulation layer 1282 on the second side surface 1215 facing away from the winding axis 127. Both the first insulation layer 1281 and the second insulation layer 1282 extend toward the stacked positive electrode uncoated area 125 along the winding axis 127. That is, the first insulation layer 1281 is located below the stacked positive electrode uncoated area 125 that is bent, which may directly provide a reaction force to the stacked positive electrode uncoated area 125 to resist the pressure from the current collector member 130. Furthermore, along the winding axis 127, the height h1 of the first insulation layer 1281 is greater than the height h2 of the second insulation layer 1282. This setting may further improve the supporting force for the stacked positive electrode uncoated area 125, relieve the problem of misalignment after the collapse of the stacked positive electrode uncoated area 125, improve the flatness of the welding plane of the stacked positive electrode uncoated area 125, and enhance the welding yield.

Please refer to FIG. 1, the terminal 150 passes through the end wall 111 and is insulated from the end wall 111. The structure of the terminal 150 may be any suitable form that is able to pass through the end wall 111 and electrically connect with the positive electrode sheet 121 or negative electrode sheet 123. For example, the cross-section may be circular, square, prismatic, or an irregular contour that can achieve stable conduction. One end of the terminal 150 facing the electrode assembly 120 passes through the end wall 111 and directly electrically connects with the electrode tab or indirectly electrically connected through an adapter. For example, the terminal 150 may be transitionally electrically connected with the positive electrode sheet 121 through the first current collector member 131, or may be transitionally electrically connected with the negative electrode sheet 123 through the second current collector member 132. One end of the terminal 150 facing away from the electrode assembly 120 is exposed to the outside of the housing 110 to form a corresponding electrode. The electrical polarity of the terminal 150 may be positive or negative. For example, in an embodiment, when the terminal 150 is electrically connected to the stacked positive electrode uncoated area 125, the terminal 150 is positive, and the housing 110 forms the corresponding negative electrode. In another embodiment, when the terminal 150 is electrically connected to the stacked negative electrode uncoated area 124, the terminal 150 is negative, and the housing 110 forms the corresponding positive electrode. An installation hole for the terminal 150 is disposed on the end wall 111, and the terminal 150 passes through the installation hole of the terminal 150 in a sealing and insulating manner. The housing 110 with such structure may improve installation efficiency, and the assembly and sealing performance is improved compared to the housing 110 with openings 113 at both ends.

Please refer to FIG. 1, the terminal 150 is made of a metal material with conductivity. The material of the terminal 150 may be aluminum. If the material of the terminal 150 is aluminum, the riveting process may be easily performed. In this embodiment, the material quality of the terminal 150 is aluminum, and the polarity is positive. Corresponding to the terminal 150, the material of the housing 110 is low carbon steel, and forms the negative electrode accordingly. The terminal 150 is electrically insulated from the housing 110. The electrical insulation between the terminal 150 and the end wall 111 of the housing 110 may be achieved in various ways. For example, insulation may be achieved by placing an insulating washer between the terminal 150 and the end wall 111. Alternatively, insulation may be achieved by forming an insulation coating layer on a part of the terminal 150. Alternatively, some of the above methods may be combined in practice.

Please refer to FIG. 1, the cover plate 160 seals and is mounted on the opening 113. The shape of the outer edge of the cover plate 160 corresponds to the shape of the opening 113, and is connected with the side wall 112 to seal the opening 113. In a specific embodiment, the periphery of the cover plate 160 has a protrusion protruding toward the interior of the housing 110, and a first recess is formed on one side of the protrusion facing away from the electrode assembly 120. The shape of orthographic projection of this first recess is not limited and may be annular, square, or other irregular shapes. The protrusion includes a first side wall 112 that matches with the inner wall of the housing 110. The first side wall 112 matches with the side wall 112 near the opening 113. The protrusion is used for assembly guidance between the cover plate 160 and the opening 113, as well as the matching between the side wall 112 of the housing 110 and the cover plate 160, which may enable quick positioning between the cover plate 160 and the opening 113 along circumference, thereby improving the efficiency of welding and the radius position accuracy of welding.

Please refer to FIG. 4, in an embodiment of the secondary battery 100 in the present disclosure, the difference between h1 and h2 is t, 0.2mm≤t≤1.5mm, for example, it may be 0.2mm, 0.4mm, 0.5mm, 0.6mm, 0.8mm, 1.0mm, 1.2mm or 1.5mm, etc. This setting ensures that the first insulation layer 1281 maintains a safe distance from the stacked positive electrode uncoated area 125, which may reduce the risk of the first insulation layer 1281 being damaged and powdered by the stacked positive electrode uncoated area 125.

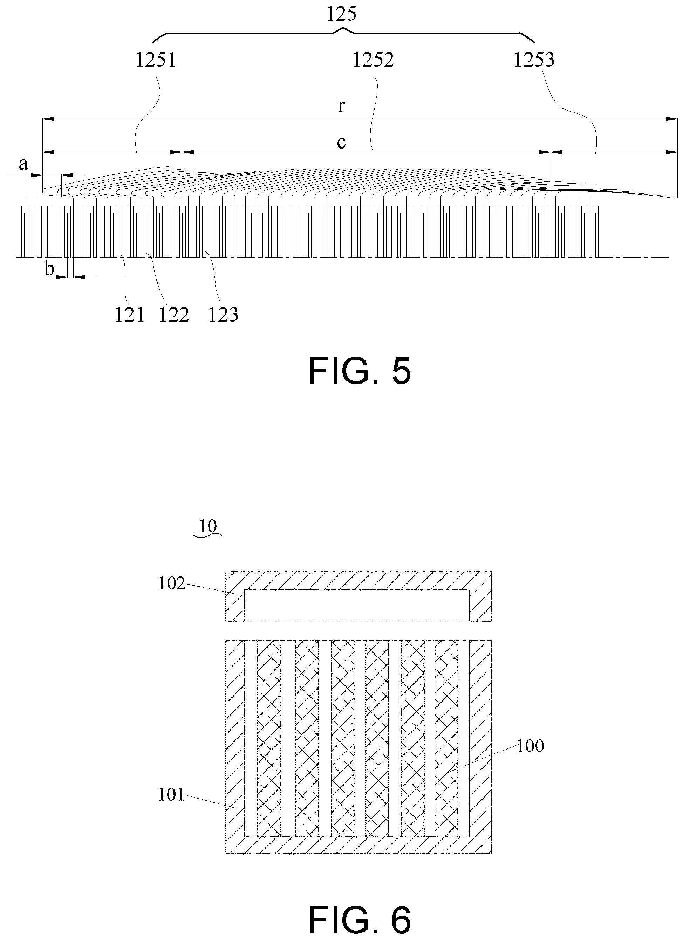

Please refer to FIG.5, in an embodiment of the secondary battery 100 in the present disclosure, the radius dimension of the misaligned part of the outermost electrode tab facing the outer periphery of the electrode assembly 120 is a, a≤1.5mm, for example, a may be 0.1mm, 0.2mm, 0.4mm, 0.5mm, 0.6mm, 0.8mm, 1.0mm, 1.2mm or 1.5mm, etc. The misaligned part is a part between the root of the positive electrode uncoated area 1213 and the outermost side of the outermost positive electrode uncoated area 1213 along the radius direction of the electrode assembly 120. The misaligned part is formed when the stacked positive electrode uncoated area 125 protrudes outward from the root of the stacked positive electrode uncoated area 125 toward the radius direction outside of the electrode assembly 120 during the bending process of the stacked positive electrode uncoated area 125 toward the winding axis 127 and the compression process after bending. The setting of a≤1.5mm may increase the annular width of the stabilization area of the stacked positive electrode uncoated area 125 suitable for welding, which is more conducive to welding, and reduces the slope of the inclined surface formed by the misaligned stacked positive electrode uncoated area 125, reducing the gap between the stacked positive electrode uncoated area 125 and the current collector member 130, so it is possible to improve the reliability and convenience of welding.

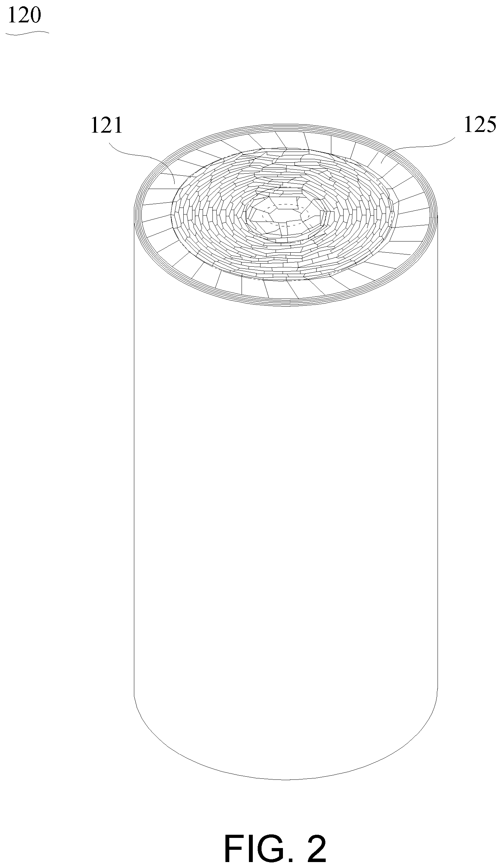

Please refer to FIG. 2 and FIG. 5, in an embodiment of the secondary battery 100 in the present disclosure, on a reference plane formed by any radial line of the winding axis 127 and the end surface of the electrode assembly, the outer ring of the wound structure cuts n circles of positive electrode uncoated area 123, n may be any value, which is not limited herein. The sum of the thicknesses of the positive electrode sheet 121, the separator 122 and the negative electrode sheet 123 is b. Furthermore, a/b<n, where a is the radius dimension of the part where the electrode tab is misaligned toward the outer periphery of the electrode assembly 120, and b is the thickness of one unit of the positive electrode sheet 121, the separator 122 and the negative electrode sheet 123. The value of b is not limited and depends on the actual situation. a/b is set to characterize the number of units of the positive electrode sheet 121, the separator 122 and the negative electrode sheet 123 covered by the part where the electrode tab is misaligned toward the outer periphery of the electrode assembly 120. The setting may enable the annular region without electrode tabs in the wound structure to accommodate the misaligned part of the outermost stacked positive electrode uncoated area 125 after collapse, ensuring that the misaligned part of the stacked positive electrode uncoated area 125 does not extend beyond the outer periphery of the electrode assembly 120, thereby reducing the probability of affecting the insertion of the electrode assembly 120 into the housing.

Please refer to FIG. 5, in an embodiment of the secondary battery 100 in the present disclosure, from the outer ring to the inner ring of the electrode assembly 120, the stacked positive electrode uncoated area 125 sequentially includes a stacking layer number increasing area 1251, a stacking layer number stabilization area 1252 and a stacking layer number decreasing area 1253, wherein the stacked positive electrode uncoated area 125 located in the stacking layer number decreasing area 1253 extends in a direction facing away from the current collector member 130. Such setting makes it possible to form a recessed inclined surface at the position of the electrode assembly 120 near the winding axis 127. This inclined surface may function to guide the electrolyte fluid on one hand, and on the other hand, may prevent the stacked positive electrode uncoated area 125 located in the stacking layer number decreasing area 1253 from warping upward, thus improving the stability and convenience of welding between the first current collector member 131 and the stacked positive electrode uncoated area 125.

Please refer to FIG. 5, in an embodiment of the secondary battery 100 in the present disclosure, the annular width of the stacked positive electrode uncoated area 125 is r, the annular width of the stacking layer number stabilization area 1252 is c, wherein c/r≥0.35, for example, the value may be 0.35, 0.4, 0.45, 0.5, 0.6, 0.7 or 0.8, etc. When c/r is within this range, it is possible to ensure the range of the stacking layer number stabilization area 1252, improve the reliability of welding, help reduce internal resistance, and enhance the performance of the secondary battery 100.

Please refer to FIG. 4, in an embodiment of the secondary battery 100 in the present disclosure, the insulation layer 128 includes a ceramic filler. The ceramic filler includes at least one of alumina, boehmite, titanium dioxide, zirconium dioxide, zinc oxide, barium sulfate, boron nitride, aluminum nitride, and magnesium nitride. However, the present disclosure is not limited to these materials, and other ceramic fillers used in the insulation layer 128 of the electrode sheet may also be adopted. The ceramic filler in the present disclosure may be selected from any one of the materials listed above, or may be selected from any multiple materials listed above. The ceramic filler, while ensuring insulation, possesses relatively high rigidity and may provide relatively stable supporting force.

Please refer to FIG. 4, in an embodiment of the secondary battery 100 in the present disclosure, the brightness of the first insulation layer 1281 is different from the brightness of the second insulation layer 1282. The difference in brightness may be obtained by adding different coloring agents or different proportions of the same coloring agent to the first insulation layer 1281 or the second insulation layer 1282 respectively. The coloring agent includes but is not limited to at least one of titanium chrome brown, titanium nickel yellow, bismuth vanadate, chromium oxide green, cobalt green, cobalt blue, iron blue, cadmium red, cadmium yellow, lithopone, carbon black, iron oxide red, and iron oxide yellow. That is, the coloring agent may be any one of the materials listed above, or may be any combination of two or more of the materials listed above. By observing the difference in brightness between the first insulation layer 1281 and the second insulation layer 1282, the front and rear sides of the positive electrode sheet 121 may be effectively distinguished, preventing the situation where the front and rear sides of the positive electrode sheet 121 are reversed. Moreover, the insulation layer 128 does not participate in chemical reactions, and by identifying the front and rear sides of the positive electrode sheet 121 through the insulation layer 128, no additional marking is needed, resulting in less impact on the battery.

Please refer to FIG. 6, this present disclosure also provides a battery assembly 10. The battery assembly 10 includes the secondary battery 100 described in any one of the above embodiments. In an embodiment of the battery assembly 10 in the present disclosure, the battery assembly 10 includes a casing 101, a casing cover 102, and multiple secondary batteries 100. The multiple secondary batteries 100 are placed in the casing 101, connected in series or parallel with each other, or in a combination of series and parallel connection. The casing cover 102 seals the casing 101 to protect the multiple secondary batteries 100. It should be noted that in addition to the secondary battery 100 of the present disclosure, the battery assembly 10 may also include parts such as a thermal management system, circuit board, etc. The battery assembly 10 may be a battery module or a battery pack, an energy storage cabinet, and so on; these will not be elaborated one by one here.

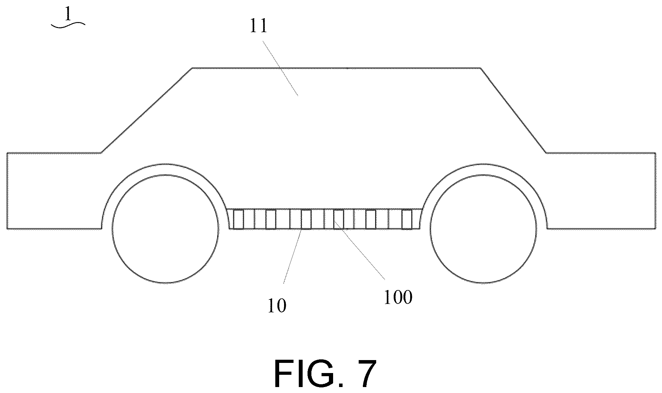

Please refer to FIG. 7, the present disclosure also provides an electronic device 1. The electronic device 1 includes the above-mentioned battery assembly 10. The work part 11 is electrically connected with the battery assembly 10 to obtain power support. As an example, the electronic device 1 is a vehicle, which may be a gasoline vehicle, gas vehicle, or new energy vehicle. The new energy vehicle may be a pure electric vehicle, hybrid vehicle, or extended-range vehicle, and so on, but is not limited thereto. The work part 11 is the vehicle body, the battery assembly 10 is disposed at the bottom of the vehicle body, and provides power support for operation of the vehicle or the operation of electrical components inside the vehicle. However, in some other embodiments, the electronic device 1 may also be a mobile phone, portable device, laptop computer, ship, spacecraft, electric toy, and electric tool, etc. Spacecraft includes aircraft, rockets, space shuttles, and spaceships, etc.; the work part 11 may be a unit component that can obtain power from the battery assembly 10 and perform corresponding work, such as the fan blade rotation unit of a fan, the dust suction working unit of a vacuum cleaner, etc. Electric toys include fixed or mobile electric toys, for example, game consoles, electric car toys, electric ship toys, and electric aircraft toys, etc.; electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiments of the present disclosure do not impose special restrictions on the above electronic device 1.

In the secondary battery in the present disclosure, the insulation layer at least covers the interface between the positive electrode coated area and the positive electrode uncoated area, and extends to the bending part of the stacked positive electrode uncoated area. That is, the insulation layer at least partially covers the positive electrode uncoated area, which may function as support against the force from the compression of the current collector member when the stacked positive electrode uncoated area is bent. Furthermore, the first insulation layer is located on the first side surface facing the winding axis, that is, located below the stacked positive electrode uncoated area that is bent, which may directly provide the stacked positive electrode uncoated area with a reaction force to resist pressure from the current collector member. Setting the height of the first insulation layer to be higher than the height of the second insulation layer may further improve the supporting force for the stacked positive electrode uncoated area, relieve the problem of misalignment after the collapse of the stacked positive electrode uncoated area, improve the flatness of the welding plane of the stacked positive electrode uncoated area, and enhance the welding yield. Therefore, the present disclosure effectively overcomes some practical problems in the existing technology, thus having high utilization value and practical significance. The above embodiments only exemplify the principles and effects of the present disclosure, and are not used to limit the present disclosure. Any person skilled in this technology may modify or change the above embodiments without departing from the spirit and scope of this present disclosure. Therefore, all equivalent modifications or changes completed by those with ordinary knowledge in the technical field without departing from the spirit and technical concept disclosed by the present disclosure should still be covered by the claims of the present disclosure.

## Claims

1. A secondary battery (100), comprising:
a housing (110);
an electrode assembly (120), accommodated in the housing (110), wherein the electrode assembly (120) comprises a wound structure formed by stacking and winding a positive electrode sheet (121), a negative electrode sheet (123) and a separator (122), the positive electrode sheet (121) comprises a positive electrode coated area (1212) coated with a positive active substance layer and a positive electrode uncoated area (1213) not coated with the positive active substance layer, and an insulation layer (128) at least covering an interface between the positive electrode coated area (1212) and the positive electrode uncoated area (1213), one end of the positive electrode uncoated area (1213) extends beyond the separator (122) along a winding axis (127) of the electrode assembly (120), and is bent toward the winding axis (127) to form a stacked positive electrode uncoated area (125);
a current collector member (130), at least partially covering the stacked positive electrode uncoated area (125), and welded to the stacked positive electrode uncoated area (125);
wherein the insulation layer (128) comprises a first insulation layer (1281) disposed on a first side surface (1214) of the positive electrode sheet (121) facing the winding axis (127) and a second insulation layer (1282) on a second side surface (1215) facing away from the winding axis (127), both the first insulation layer (1281) and the second insulation layer (1282) extend toward the stacked positive electrode uncoated area (125) along the winding axis (127), along the winding axis (127), a height h1 of the first insulation layer (1281) is greater than a height h2 of the second insulation layer (1282).

2. The secondary battery (100) according to claim 1, wherein a difference between the h1 and the h2 is t, 0.2mm≤t≤1.5mm.

3. The secondary battery (100) according to claim 1, wherein a radius dimension of a misaligned part of the outermost stacked positive electrode uncoated area (125) facing an outer periphery of the electrode assembly (120) is a, wherein a≤1.5mm, the misaligned part is a part between a root of the positive electrode uncoated area (1213) and an outermost side of the outermost positive electrode uncoated area (1213) along a radius direction of the electrode assembly (120).

4. The secondary battery (100) according to claim 3, wherein on a reference plane formed by any radial line of the winding axis (127) and an end surface of the electrode assembly (120), an outer ring of the wound structure cuts n circles of the positive electrode uncoated area (1213), a sum of thicknesses of the positive electrode sheet (121), the separator (122) and the negative electrode sheet (123) is b, wherein a/b<n.

5. The secondary battery (100) according to claim 1, wherein from an outer ring to an inner ring of the electrode assembly (120), the stacked positive electrode uncoated area (125) sequentially comprises a stacking layer number increasing area (1251), a stacking layer number stabilization area (1252) and a stacking layer number decreasing area (1253), wherein the stacked positive electrode uncoated area (125) located in the stacking layer number decreasing area (1253) extends in a direction facing away from the current collector member (130).

6. The secondary battery (100) according to claim 5, wherein an annular width of the stacked positive electrode uncoated area (125) is r, an annular width of the stacking layer number stabilization area (1252) is c, wherein c/r≥0.35.

7. The secondary battery (100) according to claim 1, wherein the insulation layer (128) comprises a ceramic filler.

8. The secondary battery (100) according to claim 7, wherein a brightness of the first insulation layer (1281) is different from a brightness of the second insulation layer (1282).

9. A battery assembly (10), comprising the secondary battery (100) according to any one of claims 1 to claim 8.

10. An electronic device (1), comprising the battery assembly (10) according to claim 9.
